# EUROPEAN PATENT SPECIFICATION

(11) **EP 4 142 190 B1**
(45) Date of publication and mention of the grant of the patent: **27.05.2026**
(21) Application number: 21193330.4
(22) Date of filing: 26.08.2021
(51) Int. Cl.: H04J 3/14, H04J 3/06

(54) **METHOD AND DEVICE FOR MONITORING A TIME SYNCHRONIZATION DISTRIBUTED VIA A NETWORK SWITCH TO BE USED IN A COMMUNICATION NETWORK OF AN AUTOMATED VEHICLE**
VERFAHREN UND VORRICHTUNG ZUM ÜBERWACHEN EINER ÜBER EINEN NETZWERKSCHALTER VERTEILTEN ZEITSYNCHRONISATION IN EINEM KOMMUNIKATIONSNETZ EINES AUTOMATISIERTEN FAHRZEUGS
PROCÉDÉ ET DISPOSITIF DE SURVEILLANCE D'UNE SYNCHRONISATION TEMPORELLE DISTRIBUÉE PAR L'INTERMÉDIAIRE D'UN COMMUTATEUR DE RÉSEAU DESTINÉS À ÊTRE UTILISÉS DANS UN RÉSEAU DE COMMUNICATION D'UN VÉHICULE AUTOMATISÉ

(43) Date of publication of application: 01.03.2023
(73) Proprietor: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(56) References cited:
- EP-A1- 3 863 199
- WO-A1-2005/027415
- HYUNG-TAEK LIM ET AL: "IEEE 802.1AS time synchronization in a switched Ethernet based in-car network", VEHICULAR NETWORKING CONFERENCE (VNC), 2011 IEEE, IEEE, 14 November 2011 (2011-11-14), pages 147 - 154, XP032081880, ISBN: 978-1-4673-0049-0, DOI: 10.1109/VNC.2011.6117136

## Description

The present invention is directed to a method for monitoring a time synchronization distributed via a network switch to be used in a communication network of an automated vehicle, a network switch configured to carry out the method, and an automated vehicle comprising the network switch.

For Autonomous driving the demand for data is getting higher and higher based on information from multiple sensors. In order to emulate the correct 3D perception of the driving environment, different sensors such as a radar sensor, a LiDAR sensor and/or a camera extract information corresponding to the environment and send it to a vehicle bus using some communication bus.

One of the communication bus could be for example an Ethernet bus where the information/data could be sent in range between 1Gbps to 10Gbps depending upon a communication bus architecture and a latency of the communication bus.

The sensor data provided by the multiple sensors need to be timestamped with a synchronized time such that a sensor data fusion is possible, i.e., each control unit in the communication network should use a same/synchronized time.

Therefore time synchronization of so called slave clocks of the respective control units of the communication network is necessary. For the time synchronization a (time) grandmaster is provided.

The time grandmaster has an internal clock and is configured to output, inter alia, a synchronization message to the control units such that the slave clocks of the control units may be synchronized to the time of the time grandmaster.

In the above described communication networks not every control unit is necessarily directly connected to the time grandmaster but often (network) switches are provided connecting the control units to the time grandmaster.

In the above given example of the Ethernet communication bus, the time grandmaster sends a time synchronization message to the slaves via Ethernet switches.

More specifically, the time grandmaster provides/sends the time using the synchronization message to a slave port of the network switch and the network switch sends a further synchronization message using master ports to the control units connected to the switch.

Before sending the synchronization message to the control units/slaves, the network switch calculates a so called residence time, i.e. the time in between receiving the synchronized time from the time grandmaster and outputting the synchronized time via the slave ports of the network switch, and adds the residence time to the synchronized time output via the slave ports of the network switch. The residence time is only calculated if the network switch has a so called 'Transparent Clock'. If the network switch has a boundary clock, no residence time is calculated and the timestamp received from the grandmaster, e.g. using PTP (explained in detail below), is just forwarded to the control units. However, in both cases the network switch on the one hand acts a slave with respect to the time grandmaster and as a master with respect to the slave control units.

However, it is problematic that, even if the communication bus architecture comprises different network switches, currently all of them are not qualified to be used in a safety context, i.e. the network switches do currently not provide ASIL integrity according to ISO26262. Thus, time synchronization with ASIL integrity via the network switches in the above described manner is not possible.

Furthermore reference is made to WO 2005/027415 A1 being directed to monitoring of paths along which signals are carried in a telecommunications network, EP 3 863 199 A1 being directed to time synchronization for time-sensitive networking complying with IEEE 802.1AS, and HYUNG-TAEK LIM ET AL, "IEEE 802.1AS time synchronization in a switched Ethernet based in-car network", VEHICULAR NETWORKING CONFERENCE (VNC), 2011 IEEE, IEEE, (20111114), doi:10.1109/VNC.2011.6117136, ISBN 978-1-4673-0049-0, pages 147 - 154, XP032081880 [A] 1-15 * abstract * * section I * * section III *.

Against the background of this prior art, one object of the present invention is, inter alia, to provide a device and a method which are suitable for overcoming at least some of the above-mentioned disadvantages of the prior art, respectively.

The object is solved by the features of the independent claims. The dependent claims have preferred further embodiments of the invention as their subject matter.

More specifically, the object is solved by a method for monitoring a time synchronization distributed via, i.e., done using, a network switch (configured) to be used in a communication network of an automated vehicle.

The network switch, or short just switch, is a networking hardware that is configured to connect devices, such as a grandmaster, further network switches and/or control units, of a communication network by using packet switching to receive data from an output device and forward the received data to a destination device.

A communication network is a network where information/data, such as sensor data and/or a time information, can be communicated/sent (as a packet of information) and received from one of the devices of the network to another device of the network.

The communication network may use difference communication standards, such as Ethernet, CAN, CAN FD, and/or Flexray at different buses optionally connected to each other via gateway switches. That is, the network switch may be a gateway switch and may be configured to translate between at least two different communication standards unidirectional or bidirectional.

The automated vehicle may be an automated car. Automated may mean that the vehicle is configured to at least temporarily control a longitudinal and/or a transverse guide of the vehicle.

The method is characterized by comprising a step of receiving a first synchronized time at a first port of the network switch, a step of receiving a second synchronized time at a second port of the network switch, a step of comparing the received first synchronized time to the received second synchronized time, and a step of outputting a control signal if a result of the comparing is that a difference between the received first synchronized time and the received second synchronized time exceeds a predefined threshold.

The control signal may be an error flag and may be output to a control unit connected to the network switch.

The first port is a slave port of the network switch. The second port is a slave port of the network switch. The number of ports is not limited to two ports, i.e. there may be for example at least two master ports and/or at least two slave ports.

The step of comparing may include comparing the synchronized times of (i.e. received at) all or some slave ports to each other, comparing the synchronized times of all or some master ports to each other, comparing the synchronized times of all or some master ports and all or some slave ports to each other.

The master port may also be called output port and the slave port may also be called input port. These ports may or may not be connected to each other, optionally by means of a control unit provided in between the master and the slave ports. The control unit of the network switch may be configured to carry out the method described herein.

The first and the second synchronized time are received from a time grandmaster of the communication network.

The time grandmaster comprises a master clock, e.g., a hardware clock, wherein the master clock fulfills a desired ASIL level.

Automotive Safety Integrity Level (ASIL) is a risk classification scheme defined by the ISO 26262 - Functional Safety for Road Vehicles standard. This is an adaptation of the Safety Integrity Level (SIL) used in IEC 61508 for the automotive industry. This classification helps defining the safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements.

There are four ASILs identified by the standard: ASIL A, ASIL B, ASIL C, ASIL D. ASIL D dictates the highest integrity requirements on the product and ASIL A the lowest. Hazards that are identified as QM do not dictate any safety requirements, i.e. QM referring to "Quality Management" means that the risk associated with a hazardous event is not unreasonable and does not therefore require safety measures in accordance with ISO 26262. When the term ASIL is used herein, all four ASIL levels (ASIL A to D) are meant.

The first and/or the second synchronized time may be sent from the network switch to time slave units of the communication network.

Time slave units may be at least one further network switch and/or at least one control unit connected to the network switch via at least one slave port, respectively.

The method may include at first synchronizing, using the grandmaster, the network switch, i.e., the master port of the network switch, using PTP messages. Preferably afterwards the synchronized time may be sent to the time slaves.

Sending the synchronized first time to the time slave units may include sending a first synchronization message from the first port to a first one of the time slave units, sending a first follow-up message from the first port to the first one of the time slave units, the first follow-up message including a time of sending the first synchronization message, optionally, receiving a first delay request from the first one of the time slave units via the first port in response to the received first follow-up message, and, optionally, sending a first delay reply including a time of receiving the first delay request from the first port to the first one of the time slave units.

Sending the synchronized second time to the time slave units may include sending a second synchronization message from the second port to a second one of the time slave units, sending a second follow-up message from the first port to the second one of the time slave units, the first follow-up message including a time of sending the second synchronization message, optionally, receiving a first delay request from the second one of the time slave units via the second port in response to the received second follow-up message, and, optionally, sending, from the second port to the first one of the time slave units, a second delay reply including a time of receiving the second delay request.

In conclusion, sending the synchronized first time and/or the synchronized second time may done using the Precision Time Protocol (PTP) as defined in IEEE 1588-2002, IEEE 1588-2008, IEEE 1588-2019 or IEEE 802.1AS (IEEE = Institute of Electrical and Electronics Engineers). The communication network may be called PTP-network.

The step of comparing may be carried out by the network switch and/or by an external control unit.

Comparing the synchronized time may be done at all the slave ports of the network switch, i.e., in case of the at least two slave ports, the synchronized first time received at a first one of the slave ports may be compared to the synchronized second time received at a second one of the at least two slave ports. Alternatively or additionally, the synchronized times received at at least one of the slave ports may be compared to a synchronized time(s) received at the master port(s), e.g, the synchronized first time received at the first one of the slave ports may be compared to the synchronized time received at one or both of the master ports and/or the synchronized second time received at the second one of the slave ports may be compared to the synchronized time received at one or both of the master ports. As explained above, the comparison may be carried out by the network switch itself, e.g., using the control unit of the network switch, and/or by an external control unit connected to the network switch.

Comparing the synchronized times at some or all of the slave ports of the neetwork switch (e.g., only) to each other could be done, additionally or alternatively, as a plausibilization of the synchronized time to be output by the network switch.

The step of comparing may be carried out by a software component of the network switch, wherein the software component, i.e., a status of the software component, may be checked by the external control unit during a start-up of the network switch.

Additionally or alternatively, a configuration of the network switch may be checked by the external control unit during the start-up of the network switch.

Checking the software component and/or the configuration may be done in a safe context to ensure ASIL integrity.

The external control unit may be connected to the network switch via a dedicated port of the network switch.

Receiving the synchronized first time, e.g., from the grandmaster, may include receiving a third synchronization message via the first port, receiving a third follow-up message via the first port, the third follow-up message including a time of sending the synchronization message, optionally, sending a third delay request via the first port in response to the received third follow-up message, and, optionally, receiving a delay reply including a time of receiving the third delay request via the first port.

Receiving the synchronized second time, e.g., from the grandmaster, may include receiving a fourth synchronization message via the second port, receiving a fourth follow-up message via the second port, the fourth follow-up message including a time of sending the fourth synchronization message, optionally, sending a fourth delay request via the second port in response to the received second follow-up message, and, optionally, receiving a delay reply including a time of receiving the fourth delay request via the second port.

In conclusion, receiving the synchronized first time and/or the synchronized second time may done using the Precision Time Protocol (PTP) as defined in IEEE 1588-2002, IEEE 1588-2008, IEEE 1588-2019 or IEEE 802.1AS (IEEE = Institute of Electrical and Electronics Engineers).

The above described method may be summarized in other words and in a more detailed manner as described in the following.

A grandmaster may be connected via a communication bus, e.g., an Ethernet communication bus, to at least one switch, e.g., multiple Ethernet switches, and may provide a time synchronization message to different slaves of different communication buses via the at least one switch.

The at least one switch as such is QM and is not ASIL qualified and might therefore not be used in a safety context requiring ASIL integrity.

Once the grandmaster sent the synchronization message to the at least one switch, the at least one switch acts as a master and may calculate a residence time in the at least one switch. This calculated residence time may be used as a correction of the synchronization message in the switch.

The at least one switch has multiple ports, either acting as slave or master ports, and more than one slave port of the switch may receive the synchronization message from the grandmaster.

A monitoring software is provided at the switch, which is configured to plausible and monitor timestamps included in the synchronization message sent by the grandmaster.

The software may be implemented in a safe partition of a memory of the switch to ensure a Freedom from Interference from other unqualified software components used by the switch.

The switch may receive the synchronization message from the grandmaster with at least two ports. These two ports work as slave ports so that they can receive the timestamps from the grandmaster.

The software is configured to compare the timestamps to each other included in the synchronization message and received at the two slave ports of the network switch, e.g. via PTP (see above), respectively.

The comparison can be carried out internally, i.e. by the network switch itself, and/or externally by a control unit, e.g. another network switch and/or an ECU (electronic control unit), connected to another port of the network switch.

The other part, i.e., at least some of the remaining ports, of the network switch may work as a master hence these ports are called master ports which may further send a timestamp information to multiple ECUs and optionally other network components.

The timestamp information used by the multiple master ports may be compared to each other in the same way as described above with respect to the slave ports in order to ensure that each one of the master ports uses a same timestamp before the network switch sends the timestamp to the multiple ECUs or other network components.

Thus, the input and/or the output of the network switch may be are monitored by an internal monitoring unit and/or by an external monitoring unit (both) collecting all the timing information from at least some or all ports of the network switch.

If the internal monitoring unit is provided, the internal monitoring unit may be configured to do the monitoring itself and additionally send the timestamps to be monitored using for example PTP messages to the external monitoring unit.

The external monitoring unit may also be configured to monitor both, i.e., input/slave and output/master, ports of the network switch.

The external monitoring unit which may be connected to the one of the output ports of the network switch may also be configured to check the configuration of the network switch and optionally additionally monitor the internal monitoring unit for correct configuration and operation.

An additional test, i.e., a startup test, may be implemented to ensure a correct configuration of the monitoring software of the internal monitoring unit and the configuration, e.g., including a port assignment, thereof.

Also provided is a network switch configured to monitor a time distribution and to be used in a communication network of an automated vehicle. The network switch comprises a first and a second port and is configured to carry out the above described method at least partly.

The time grand master may provide the most accurate time of the devices of the communication network. The grand master may serves as a reference clock and may also be referred to as grandmaster clock. The control units connected to the network switch may be called slaves comprising a slave clock to be synchronized to the master clock of the time grand master. The network switch may have a master and a slave role, and might be called boundary clock and/or transparent clock.

The description given above with respect to the method applies mutatis mutandis to the network switch and vice versa.

Also provided is an automated vehicle, e.g., an automated cars, comprising the above described network switch.

The description given above with respect to the method and the network switch applies mutatis mutandis to the automated vehicle and vice versa.

In the following an embodiment will be described with reference to figures 1 to 3.
- Fig. 1: shows schematically a communication network of an automated vehicle comprising a network switch,
- Fig. 2: shows schematically a flowchart of a method for monitoring a time synchronization distributed via the network switch shown in figure 1, and
- Fig. 3: shows schematically a method of time synchronization using PTP.

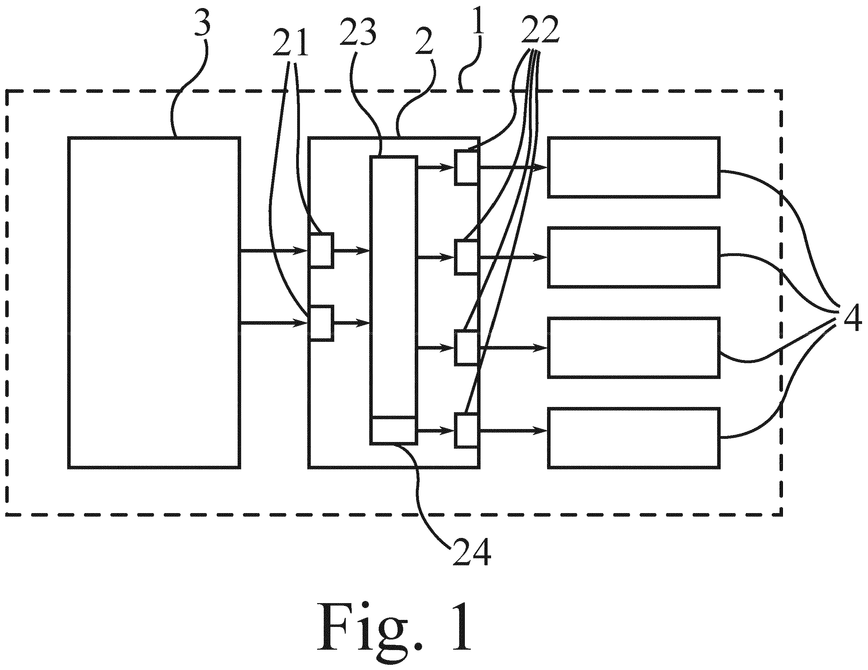

As can be gathered from figure 1, the communication network 1 of the (not shown) automated vehicle comprises a network switch 2 connected to a time grandmaster 3 on an input side thereof and to a plurality of, here four, control units 4 being time slave units on an output side thereof. Each one of the control units 4 comprises a slave clock to be synchronized to a master clock of the time grandmaster 3. Therefore, the time grandmaster sends a synchronized time, i.e. a time of the master clock, via the network switch 2 to each one of the control units 4, respectively.

Therefore, the network switch 2 comprises two slave ports 21 on the input side thereof which are connected to the time grandmaster 3, respectively. The network switch 2 further comprises four master ports 22 on the output side thereof which are connected to one of the four control units 4, respectively. In between the slave ports 21 and the master ports 22 a control unit 23 of the network switch 2 is provided. The control unit 23 of the network switch 2 comprises a safe partition 24 comprising a configuration of the network switch 2 and monitoring software to be carried out by the control unit 23, wherein the control unit 23 may be called internal control module.

However, there may be provided, additionally or alternatively, an external control unit, e.g. one of the control units 4 connected to the network switch 2.

With the above described configuration, the network switch 2 is configured to carry out the method for monitoring a time synchronization carried out using the network switch 2 to each one of the control units 4.

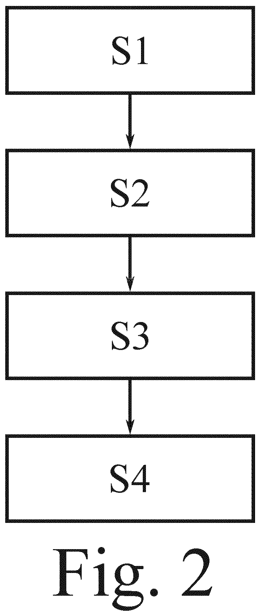

As can be gartered from figure 2, the method comprises substantially four steps S1 - S4.

In a first step S1 of the method, a first synchronized time is received at one of the slave ports 21 of the network switch 2.

In a second step S2 of the method, a second synchronized time is received at the other one of the slave ports 21 of the network switch 2.

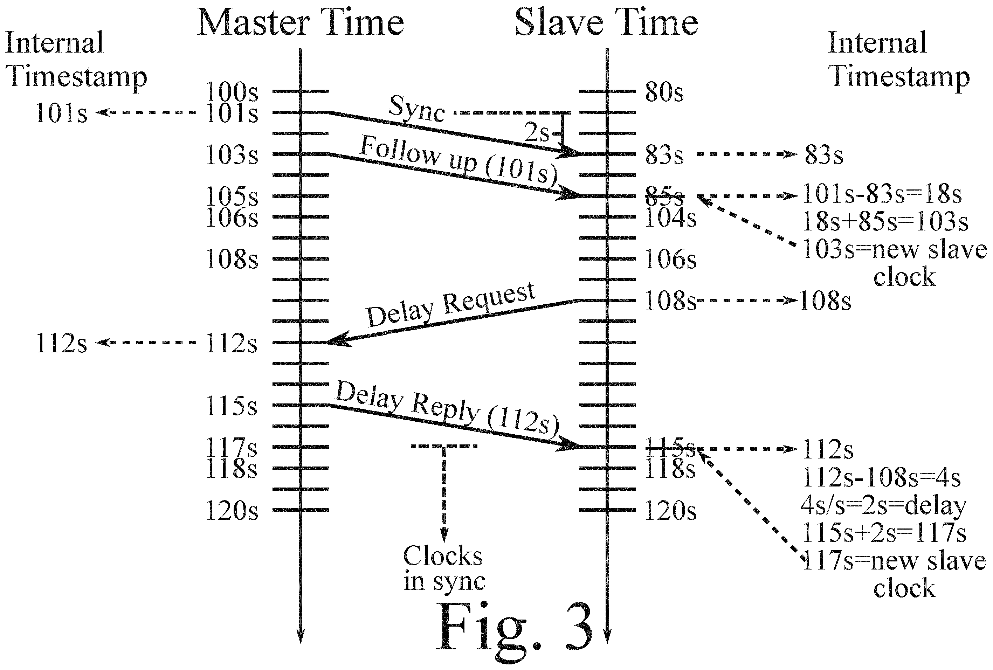

The first and the second step should be carried out simultaneously. Ideally the first and the second synchronized time should be same, as will be explained in detail with reference to figure 3.

Sending the first and/or the second synchronized time from the time grandmaster 3 to the network switch 2, more specifically to the control unit 23 of the network switch 2 via the respective one of the master ports 21, may be done using the PTP (as defined above). This is shown in detail in figure 3.

Sending the synchronized first and second time includes sending a synchronization message from the time grandmaster 3 to each one of the master ports 21 of the network switch 2, respectively.

The time grandmaster 3 creates the synchronization message (short: sync) at 100 seconds master time, i.e., the time of the master clock of the grandmaster 3, which is sent to the slave, here the network switch 2. However, due to internal queues and latencies of the time grand master 3, the synchronization message is effectively sent and time-stamped at the local master clock time of 101 seconds. Due to network delays of the communication network 1, the network switch 2 receives the synchronization message not at 81s of a slave time of the network switch 2 but two seconds later, at 83 seconds of a slave time of the network switch 2, i.e., the time of the slave clock of the network switch 2.

Sending the synchronized first and second time includes further includes, after sending the synchronization message, sending a follow-up message from the time grandmaster 3 to each one of the master ports 21 of the network switch 2

That is, the time grandmaster 3 sends the follow-up message after sending the synchronization message, here at 103 seconds master time. This follow-up message contains the previously timestamped value of 101 seconds master time in the message, i.e., the master time of sending the synchronization message from the time grandmaster 3 to the network switch 2. This follow-up message is received two seconds after sending it from the time grandmaster 3 to the network switch 2 at the network switch 2, here at the slave time of 85 seconds. The control unit 23 of the network switch 2 then subtracts the previously timestamped value of 83 seconds, i.e., the slave time of receiving the synchronization message, from the (here 101 seconds) master time value in the follow-up message, resulting in an offset (here of 18 seconds). The offset is then added to a current time of slave , resulting in a new time of 103 seconds.

However, the time grandmaster 3 and the network switch 2 are not yet fully synchronized. In this correction, the delay in the communication network 1 was not taken into account. To eliminate this delay, the optional two messages described below may be sent from the time grandmaster 3 to the network switch 2 and vice versa.

A first one of these two messages is a delay request sent from the network switch 2 to the time grandmaster 3. The delay request message comprises a slave time of sending the delay request to the time grandmaster, here 108 seconds The time grandmaster 3 receives the delay request and stores a master time of receiving this delay request, here at 112 seconds master time.

A first one of these two messages is a delay reply including a master time, here 112 seconds, of receiving the delay request, wherein the delay replay is sent from the time grandmaster 3 to the network switch 2.

The network switch 2 receives the delay reply message at 115 seconds slave time. The network switch 2 can now calculate the network delay by subtracting the slave time at which the network switch 2 sent the delay request to the time grandmaster 3 (here 108 seconds) from the time at which the time grandmaster 3 received the delay request (here 112 seconds). This results in a certain time value (here 4 seconds). However, since two messages (delay request and delay response) were sent, the result is divided by 2 (here giving a delay of 2 seconds). The network switch may then corrects its clock by half the delay (here resulting in 117 seconds) and is now synchronous with the master time.

Here, the time synchronization using PTP described above with reference to figure 3 is carried out separately two times, i.e. a first time via a first one of the two master ports 21 (using a first synchronization message, a first follow-up message, a first delay request and a first delay response) and a second time via a second one of the two master ports 21. The time/result (in the above described example 117s) obtained via the first one of the two master ports 21 is equal to the so called received first synchronized time and the time/result (in the above described example 117s) obtained via the second one of the two master ports 21 is equal to the so called received second synchronized time.

Additionally or alternatively, at least one of the received first synchronized time (and, in case of a transparent clock, the received second synchronized time may be corrected by the control unit 23 of the network switch 2 using a residence time) and is output to all of the slave ports 22, respectively. This time received by a first one of the four slave ports 22 may be called corrected first received synchronized time, the time received by a second one of the four slave ports 22 may be called corrected second received synchronized time, time received by a third one of the four slave ports 22 may be called corrected third received synchronized time, and the time received by a fourth one of the four slave ports 22 may be called corrected fourth received synchronized time. The corrected first to fourth received synchronized time may be obtained by using the PTP (as described in principle above) to communicate the synchronized first time of the first master port 21 to each one of the slave ports 22, respectively.

In a third step S3 of the method, the received first synchronized time is compared to the received second synchronized time at the slave port 21 of the network switch 2. Moreover, additionally or alternatively, the first to fourth received synchronized times may be compared to each other. This comparison is carried out by the control unit 23 of the network switch 2 using a monitoring and plausibilization software stored in a safe partition 24 of a memory being part of the control unit 23 of the network switch 2. The comparison may be carried out, additionally or alternatively, by an external control unit, e.g., one of the control units 4 receiving the synchronized times using PTP via one of the slave ports 22.

In a fourth step S4 of the method, a control signal is output if a result of the comparison carried out in the third step S3 is that a difference between the received first synchronized time and the received second synchronized time exceeds a predefined threshold and, optionally, if a difference between the corrected first to fourth received synchronized time exceeds the threshold.

But, if the difference(s) is/are below the threshold, the corrected first to fourth received synchronized time are sent from the network switch 2 to the time slave 4 units of the communication network 1, optionally using PTP.

Furthermore, the above described first step S1 of the method may include during start-up of the network switch 1, e.g., when the automated vehicle is started, that the software component used for the comparison in step S3 and/or a configuration of the network switch is checked by one of the external control units 4 and/or internally by control unit 23 of the network switch 2 during the start-up of the network switch 2.

### Reference signs list

- 1: communication network
- 2: network switch
- 21: slave ports
- 22: master ports
- 23: control unit/internal control module of the network switch
- 24: software component in safe partition of a memory of the network switch
- 3: time grandmaster
- 4: control units/slaves
- S1 -S4: steps of the method

## Claims

1. Method for monitoring a time synchronization distributed via a network switch (2) to be used in a communication network (1) of an automated vehicle, the method comprises:
- receiving (S1), a first synchronized time, at a first slave port (21) of the network switch (2), the method **characterized by**:
- receiving (S2), a second synchronized time, at a second slave port (21) of the network switch (2)
- comparing (S3) the received first synchronized time to the received second synchronized time, and
- output (S4) a control signal if a result of the comparing (S3) is that a difference between the received first synchronized time and the received second synchronized time exceeds a predefined threshold,
- wherein the first and the second synchronized time is received from a master clock of a time grandmaster (2) of the communication network (1), the master clock fulfilling a desired Automotive Safety Integrity Level.

2. Method according to any of claim 1, **characterized in that** the first and/or the second synchronized time is sent from the network switch (2) to time slave units (4) of the communication network (1).

3. Method according to claim 2, **characterized in that** sending the first synchronized time to the time slave units (4) includes:
- sending a first synchronization message from the first port (22) to a first one of the time slave units (4),
- sending a first follow-up message from the first port (22) to the first one of the time slave units (4), the first follow-up message including a time of sending the first synchronization message,
- optionally, receiving a first delay request from the first one of the time slave units (4) via the first port (22) in response to the received first follow-up message, and
- optionally, sending a first delay reply including a time of receiving the first delay request from the first port (22) to the first one of the time slave units (4).

4. Method according to claim 2 or 3, **characterized in that** sending the second synchronized time to the time slave units (4) includes:
- sending a second synchronization message from the second port (22) to a second one of the time slave units (4),
- sending a second follow-up message from the first port (22) to the second one of the time slave units (4), the first follow-up message including a time of sending the second synchronization message,
- optionally, receiving a first delay request from the second one of the time slave units (4) via the second port (22) in response to the received second follow-up message, and
- optionally, sending, from the second port (22) to the first one of the time slave units (4), a second delay reply including a time of receiving the second delay request.

5. Method according to any of claims 1 to 4, **characterized in that** the comparing (S3) is carried out by the network switch (2) and/or by an external control unit (4).

6. Method according to claim 5, **characterized in that** the comparing (S3) is carried out by a software component (24) of the network switch (2), and wherein the software component (24) is checked by the external control unit (4) during a start-up of the network switch (2), and optionally, a configuration of the network switch (2) is checked by the external control unit (4) during the start-up of the network switch (2).

7. Method according to any of claims 5 or 6, **characterized in that** the external control unit (4) is connected to the network switch (2) via a dedicated port (22) of the network switch (2).

8. Method according to any of claims 1 to 7, **characterized in that** receiving (S1) the first synchronized time includes:
- receiving a third synchronization message via the first port (21),
- receiving a third follow-up message via the first port (21), the third follow-up message including a time of sending the third synchronization message,
- optionally, sending a third delay request via the first port (21) in response to the received third follow-up message, and
- optionally, receiving a delay reply including a time of receiving the third delay request via the first port (21).

9. Method according to any of claims 1 to 8, **characterized in that** receiving (S2) the second synchronized time includes:
- receiving a fourth synchronization message via the second port (21),
- receiving a fourth follow-up message via the second port (21), the fourth follow-up message including a time of sending the fourth synchronization message,
- optionally, sending a fourth delay request via the second port (21) in response to the received second follow-up message, and
- optionally, receiving a delay reply including a time of receiving the fourth delay request the second port (21).

10. Network switch (2) configured to monitor a time synchronization and to be used in a communication network (1) of an automated vehicle, **characterized in that** the network switch (2) comprises a first and a second port (21, 22) and is configured to carry out the method according to any of claims 1 to 9.

11. Automated vehicle comprising the network switch (2) according to claim 10.

## Patentansprüche

1. Verfahren zur Überwachung einer Zeitsynchronisation, die über einen Netzwerk-Switch (2) verteilt wird, zur Verwendung in einem Kommunikationsnetzwerk (1) eines automatisierten Fahrzeugs, **dadurch gekennzeichnet, dass** das Verfahren umfasst:
• Empfangen (S1) einer ersten synchronisierten Zeit an einem ersten Slave-Port (21) des Netzwerk-Switches (2), wobei das Verfahren **dadurch gekennzeichnet ist, dass**:
• Empfangen (S2) einer zweiten synchronisierten Zeit an einem zweiten Slave-Port (21) des Netzwerk-Switches (2),
• Vergleichen (S3) der empfangenen ersten synchronisierten Zeit mit der empfangenen zweiten synchronisierten Zeit, und
• Ausgeben (S4) eines Steuersignals, wenn ein Ergebnis des Vergleichens (S3) ist, dass eine Differenz zwischen der empfangenen ersten synchronisierten Zeit und der empfangenen zweiten synchronisierten Zeit einen vordefinierten Schwellenwert überschreitet,
• wobei die erste und die zweite synchronisierte Zeit von einer Master-Uhr eines Zeit-Grandmasters (2) des Kommunikationsnetzwerks (1) empfangen wird, wobei die Master-Uhr ein gewünschtes Automotive Safety Integrity Level erfüllt.

2. Verfahren nach Anspruch 1, **dadurch gekennzeichnet, dass** die erste und/oder die zweite synchronisierte Zeit von dem Netzwerk-Switch (2) an Zeit-Slave-Einheiten (4) des Kommunikationsnetzwerks (1) gesendet wird.

3. Verfahren nach Anspruch 2, **dadurch gekennzeichnet, dass** das Senden der ersten synchronisierten Zeit an die Zeit-Slave-Einheiten (4) umfasst:
• Senden einer ersten Synchronisationsnachricht von dem ersten Port (22) an eine erste der Zeit-Slave-Einheiten (4),
• Senden einer ersten Follow-up-Nachricht von dem ersten Port (22) an die erste der Zeit-Slave-Einheiten (4), wobei die erste Follow-up-Nachricht eine Zeit des Sendens der ersten Synchronisationsnachricht umfasst,
• optional Empfangen einer ersten Verzögerungsanfrage von der ersten der Zeit-Slave-Einheiten (4) über den ersten Port (22) als Antwort auf die empfangene erste Follow-up-Nachricht, und
• optional Senden einer ersten Verzögerungsantwort, die eine Zeit des Empfangens der ersten Verzögerungsanfrage umfasst, von dem ersten Port (22) an die erste der Zeit-Slave-Einheiten (4).

4. Verfahren nach Anspruch 2 oder 3, **dadurch gekennzeichnet, dass** das Senden der zweiten synchronisierten Zeit an die Zeit-Slave-Einheiten (4) umfasst:
• Senden einer zweiten Synchronisationsnachricht von dem zweiten Port (22) an eine zweite der Zeit-Slave-Einheiten (4),
• Senden einer zweiten Follow-up-Nachricht von dem ersten Port (22) an die zweite der Zeit-Slave-Einheiten (4), wobei die erste Follow-up-Nachricht eine Zeit des Sendens der zweiten Synchronisationsnachricht umfasst,
• optional Empfangen einer ersten Verzögerungsanfrage von der zweiten der Zeit-Slave-Einheiten (4) über den zweiten Port (22) als Antwort auf die empfangene zweite Follow-up-Nachricht, und
• optional Senden, von dem zweiten Port (22) an die erste der Zeit-Slave-Einheiten (4), einer zweiten Verzögerungsantwort, die eine Zeit des Empfangens der zweiten Verzögerungsanfrage umfasst.

5. Verfahren nach einem der Ansprüche 1 bis 4, **dadurch gekennzeichnet, dass** das Vergleichen (S3) von dem Netzwerk-Switch (2) und/oder von einer externen Steuereinheit (4) durchgeführt wird.

6. Verfahren nach Anspruch 5, **dadurch gekennzeichnet, dass** das Vergleichen (S3) von einer Softwarekomponente (24) des Netzwerk-Switches (2) durchgeführt wird, und wobei die Softwarekomponente (24) von der externen Steuereinheit (4) während eines Hochfahrens des Netzwerk-Switches (2) geprüft wird, und optional eine Konfiguration des Netzwerk-Switches (2) von der externen Steuereinheit (4) während des Hochfahrens des Netzwerk-Switches (2) geprüft wird.

7. Verfahren nach einem der Ansprüche 5 oder 6, **dadurch gekennzeichnet, dass** die externe Steuereinheit (4) mit dem Netzwerk-Switch (2) über einen dedizierten Port (22) des Netzwerk-Switches (2) verbunden ist.

8. Verfahren nach einem der Ansprüche 1 bis 7, **dadurch gekennzeichnet, dass** das Empfangen (S1) der ersten synchronisierten Zeit umfasst:
• Empfangen einer dritten Synchronisationsnachricht über den ersten Port (21),
• Empfangen einer dritten Follow-up-Nachricht über den ersten Port (21), wobei die dritte Follow-up-Nachricht eine Zeit des Sendens der dritten Synchronisationsnachricht umfasst,
• optional Senden einer dritten Verzögerungsanfrage über den ersten Port (21) als Antwort auf die empfangene dritte Follow-up-Nachricht, und
• optional Empfangen einer Verzögerungsantwort, die eine Zeit des Empfangens der dritten Verzögerungsanfrage umfasst, über den ersten Port (21).

9. Verfahren nach einem der Ansprüche 1 bis 8, **dadurch gekennzeichnet, dass** das Empfangen (S2) der zweiten synchronisierten Zeit umfasst:
• Empfangen einer vierten Synchronisationsnachricht über den zweiten Port (21),
• Empfangen einer vierten Follow-up-Nachricht über den zweiten Port (21), wobei die vierte Follow-up-Nachricht eine Zeit des Sendens der vierten Synchronisationsnachricht umfasst,
• optional Senden einer vierten Verzögerungsanfrage über den zweiten Port (21) als Antwort auf die empfangene zweite Follow-up-Nachricht, und
• optional Empfangen einer Verzögerungsantwort, die eine Zeit des Empfangens der vierten Verzögerungsanfrage umfasst, über den zweiten Port (21).

10. Netzwerk-Switch (2), der konfiguriert ist, eine Zeitsynchronisation zu überwachen und zur Verwendung in einem Kommunikationsnetzwerk (1) eines automatisierten Fahrzeugs verwendet zu werden, **dadurch gekennzeichnet, dass** der Netzwerk-Switch (2) einen ersten und einen zweiten Port (21, 22) umfasst und konfiguriert ist, das Verfahren nach einem der Ansprüche 1 bis 9 durchzuführen.

11. Automatisiertes Fahrzeug, umfassend den Netzwerk-Switch (2) nach Anspruch 10.

## Revendications

1. Procédé de surveillance d'une synchronisation temporelle distribuée via un commutateur de réseau (2) destiné à être utilisé dans un réseau de communication (1) d'un véhicule automatisé, **caractérisé en ce que** le procédé comprend:
• la réception (S1) d'un premier temps synchronisé, au niveau d'un premier port esclave (21) du commutateur de réseau (2), le procédé étant **caractérisé en ce que**:
• la réception (S2) d'un deuxième temps synchronisé, au niveau d'un deuxième port esclave (21) du commutateur de réseau (2),
• la comparaison (S3) du premier temps synchronisé reçu au deuxième temps synchronisé reçu, et
• la délivrance (S4) d'un signal de commande si un résultat de la comparaison (S3) est qu'une différence entre le premier temps synchronisé reçu et le deuxième temps synchronisé reçu dépasse un seuil prédéfini,
• le premier et le deuxième temps synchronisé étant reçus d'une horloge maître d'un grand-maître temporel (2) du réseau de communication (1), l'horloge maître satisfaisant un niveau d'intégrité de sécurité automobile souhaité.

2. Procédé selon la revendication 1, **caractérisé en ce que** le premier et/ou le deuxième temps synchronisé est envoyé depuis le commutateur de réseau (2) à des unités esclaves temporelles (4) du réseau de communication (1).

3. Procédé selon la revendication 2, **caractérisé en ce que** l'envoi du premier temps synchronisé aux unités esclaves temporelles (4) comprend :
• l'envoi d'un premier message de synchronisation depuis le premier port (22) à une première des unités esclaves temporelles (4),
• l'envoi d'un premier message de suivi depuis le premier port (22) à la première des unités esclaves temporelles (4), le premier message de suivi comprenant un temps d'envoi du premier message de synchronisation,
• facultativement, la réception d'une première demande de délai de la première des unités esclaves temporelles (4) via le premier port (22) en réponse au premier message de suivi reçu, et
• facultativement, l'envoi d'une première réponse de délai comprenant un temps de réception de la première demande de délai depuis le premier port (22) à la première des unités esclaves temporelles (4).

4. Procédé selon la revendication 2 ou 3, **caractérisé en ce que** l'envoi du deuxième temps synchronisé aux unités esclaves temporelles (4) comprend :
• l'envoi d'un deuxième message de synchronisation depuis le deuxième port (22) à une deuxième des unités esclaves temporelles (4),
• l'envoi d'un deuxième message de suivi depuis le premier port (22) à la deuxième des unités esclaves temporelles (4), le premier message de suivi comprenant un temps d'envoi du deuxième message de synchronisation,
• facultativement, la réception d'une première demande de délai de la deuxième des unités esclaves temporelles (4) via le deuxième port (22) en réponse au deuxième message de suivi reçu, et
• facultativement, l'envoi, depuis le deuxième port (22) à la première des unités esclaves temporelles (4), d'une deuxième réponse de délai comprenant un temps de réception de la deuxième demande de délai.

5. Procédé selon l'une quelconque des revendications 1 à 4, **caractérisé en ce que** la comparaison (S3) est effectuée par le commutateur de réseau (2) et/ou par une unité de commande externe (4).

6. Procédé selon la revendication 5, **caractérisé en ce que** la comparaison (S3) est effectuée par un composant logiciel (24) du commutateur de réseau (2), et le composant logiciel (24) est vérifié par l'unité de commande externe (4) pendant un démarrage du commutateur de réseau (2), et facultativement, une configuration du commutateur de réseau (2) est vérifiée par l'unité de commande externe (4) pendant le démarrage du commutateur de réseau (2).

7. Procédé selon l'une quelconque des revendications 5 ou 6, **caractérisé en ce que** l'unité de commande externe (4) est connectée au commutateur de réseau (2) via un port dédié (22) du commutateur de réseau (2).

8. Procédé selon l'une quelconque des revendications 1 à 7, **caractérisé en ce que** la réception (S1) du premier temps synchronisé comprend :
• la réception d'un troisième message de synchronisation via le premier port (21),
• la réception d'un troisième message de suivi via le premier port (21), le troisième message de suivi comprenant un temps d'envoi du troisième message de synchronisation,
• facultativement, l'envoi d'une troisième demande de délai via le premier port (21) en réponse au troisième message de suivi reçu, et
• facultativement, la réception d'une réponse de délai comprenant un temps de réception de la troisième demande de délai via le premier port (21).

9. Procédé selon l'une quelconque des revendications 1 à 8, **caractérisé en ce que** la réception (S2) du deuxième temps synchronisé comprend :
• la réception d'un quatrième message de synchronisation via le deuxième port (21),
• la réception d'un quatrième message de suivi via le deuxième port (21), le quatrième message de suivi comprenant un temps d'envoi du quatrième message de synchronisation,
• facultativement, l'envoi d'une quatrième demande de délai via le deuxième port (21) en réponse au deuxième message de suivi reçu, et
• facultativement, la réception d'une réponse de délai comprenant un temps de réception de la quatrième demande de délai via le deuxième port (21).

10. Commutateur de réseau (2) configuré pour surveiller une synchronisation temporelle et destiné à être utilisé dans un réseau de communication (1) d'un véhicule automatisé, **caractérisé en ce que** le commutateur de réseau (2) comprend un premier et un deuxième port (21, 22) et est configuré pour effectuer le procédé selon l'une quelconque des revendications 1 à 9.

11. Véhicule automatisé comprenant le commutateur de réseau (2) selon la revendication 10.
